# FASCICULE DE BREVET EUROPEEN

(11) **EP 1 713 610 B1**
(45) Date de publication et mention de la délivrance du brevet: **09.07.2008**
(21) Numéro de dépôt: 05717603.4
(22) Date de dépôt: 10.02.2005
(51) Int. Cl.: B23K 11/31

(54) **OUTIL DE SERRAGE, EN PARTICULIER PINCE A SOUDER, AVEC UN SYSTEME DE COMPENSATION**
KLEMMWERKZEUG, INSBESONDERE LÖTZANGE, MIT EINEM AUSGLEICHSSYSTEM
CLAMPING TOOL, IN PARTICULAR WELDING GUN, WITH A COMPENSATION SYSTEM

(30) Priorité: 13.02.2004 FR 0401432
(43) Date de publication de la demande: 25.10.2006
(73) Titulaire: Salesse, Christian, 07100 Annonay (FR); Loriot, Jean-Marc, F-75015 Paris (FR)
(72) Inventeur: Salesse, Christian, 07100 Annonay (FR); Loriot, Jean-Marc, F-75015 Paris (FR)
(74) Mandataire: Plaçais, Jean Yves
(86) Numéro de dépôt international: PCT/FR2005/000306
(87) Numéro de publication internationale: WO 2005/077585

(56) Documents cités:
- WO-A-02/076665

## Description

L'invention se rapporte au domaine des outils de serrage, tels que notamment les pinces à souder.

Elle concerne plus particulièrement un outil de serrage comportant un premier organe et un deuxième organe capables d'un déplacement relatif sous l'action d'un dispositif d'entraînement, ce dispositif comprenant une vis d'un pas donné propre à être entraîné en rotation autour d'un axe, dans un sens ou dans un sens opposé, sous l'action d'un moteur ; un écrou coopérant avec la vis et propre à être entraîné en translation dans la direction de l'axe de la vis, ledit écrou étant solidaire en translation du premier organe ; des premiers moyens de guidage définissant un guidage linéaire parallèle à l'axe de la vis pour bloquer la rotation de l'écrou dans une première phase de déplacement de l'écrou ; et des deuxièmes moyens de guidage définissant un guidage hélicoïdal qui s'étend suivant l'axe de la vis et qui a un pas inversé par rapport au pas de la vis pour permettre la rotation de l'écrou dans le même sens de rotation que la vis dans une deuxième phase de déplacement de l'écrou.

On connaît déjà, d'après la publication internationale W0 02/076665, un outil de serrage de ce type dont le dispositif d'entraînement présente un rapport cinématique variable avec une première phase de déplacement où l'écrou est bloqué en rotation et une deuxième phase de déplacement où l'écrou est entraîné en rotation dans le même sens que la vis, ce qui permet alors de diminuer le pas apparent de la vis et donc la vitesse en translation de l'écrou dans cette deuxième phase de déplacement.

Dans une forme de réalisation préférentielle, cet outil de serrage connu est réalisé sous la forme d'une pince à souder, dans laquelle le premier organe (aussi appelé "organe mobile") constitue une électrode, tandis que le deuxième organe (encore appelé "organe fixe") constitue une contre-électrode.

Dans cette application particulière à la pince à souder, le fonctionnement du dispositif d'entraînement peut se trouver perturbé du fait d'une usure progressive des électrodes. En effet, lorsqu'une telle pince à souder est utilisée pour le soudage d'une tôle, le point d'impact de l'électrode sur la tôle correspond alors à des positions variables de l'écrou par rapport aux moyens de guidage assurant le guidage axial et le guidage hélicoïdal. Il peut alors arriver, par exemple, que l'écrou soit guidé trop tôt par les deuxièmes moyens de guidages (guidage hélicoïdal), ce qui a alors pour conséquence que la phase de ralentissement intervient trop tôt, alors que la distance qui sépare les extrémités des électrodes usées est trop grande.

D'une façon générale, cet inconvénient se retrouve dans de tels outils de serrage, qu'il s'agisse ou non de pinces à souder, la position mutuelle du premier organe et du deuxième organe devant être réétalonnée périodiquement.

L'invention a notamment pour but de surmonter un tel inconvénient.

Elle propose à cet effet un système de compensation interposé entre le premier organe et un support mobile solidaire de l'écrou pour réinitialiser la position de ce premier organe par rapport au deuxième organe, de sorte que les première et deuxième phases de déplacement engendrées par les premier et deuxième moyens de guidage restent synchrones avec les phases nécessaires à une optimisation du déplacement du premier organe.

Ce système de compensation permet ainsi de réinitialiser ou calibrer périodiquement la position de l' écrou par rapport au premier organe, et en particulier la position dans laquelle l'écrou quitte les premiers moyens de guidage définissant un guidage linéaire pour aborder les deuxièmes moyens de guidage définissant un guidage hélicoïdal.

Ainsi, lorsque l'écrou est muni d'éléments suiveurs, tels que des galets, comme décrit dans la publication précitée, ceci permet de réinitialiser la position où les galets quittent le guidage linéaire pour aborder le guidage hélicoïdal.

Dans une forme de réalisation préférée de l'invention, le système de compensation comprend le support mobile réalisé sous la forme d'un élément tubulaire solidaire de l'écrou et muni d'un filetage extérieur, ainsi qu'un moyeu taraudé intérieurement et coopérant avec le filetage extérieur du support tubulaire, ce moyeu supportant le premier organe par l'intermédiaire d'une butée à billes.

De préférence, l'outil de serrage comprend des moyens de positionnement pour placer sélectivement le moyeu dans l'une des trois positions suivantes :
- position normale ("position A") en laquelle le moyeu est solidaire en translation et en rotation du support mobile ;
- position de rééinitialisation ("position B") en laquelle le moyeu est solidaire en translation et en rotation du premier organe ; et
- position intermédiaire ("position C") en laquelle le moyeu est libre sauf par sa liaison avec la butée à billes et par filetage avec le support mobile.

Les moyens de positionnement précités peuvent revêtir différentes formes.

Dans une forme de réalisation, donnée à titre d'exemple, ces moyens de positionnement comprennent un disque-écrou solidaire en rotation du moyeu, déplaçable librement en translation axiale par rapport au moyeu et taraudé intérieurement pour coopérer avec le filetage extérieur du support tubulaire ; un ressort agencé pour écarter le disque-écrou d'une extrémité du moyeu ; des noyaux plongeurs solidaires d'un disque mobile et traversant une platine faisant partie du premier organe ; et un bobinage porté par la platine et agencé, lorsqu'il est alimenté électriquement, pour déplacer le disque-écrou vers l'extrémité du moyeu et le disque mobile solidaire des noyaux plongeurs vers le disque-écrou, à l'encontre d'un organe de rappel agissant sur les noyaux plongeurs.

Dans une forme de réalisation préférentielle, on prévoit que
- dans la position normale ("position A"), le bobinage n'est pas alimenté électriquement, si bien que le disque-écrou est écarté de l'extrémité du moyeu, assurant ainsi un blocage du moyeu sur le support mobile ;
- dans la position de réinitialisation ("position B"), le bobinage est alimenté électriquement, si bien que: le disque-écrou se rapproche au contact de l'extrémité du moyeu et que le disque mobile se rapproche au contact du disque-écrou assurant ainsi un blocage du moyeu sur la platine et, par conséquent, sur le premier organe ; et
- dans la position intermédiaire ("position C"), le bobinage est alimenté électriquement, si bien que le disque-écrou est rapproché au contact de l'extrémité du moyeu, tandis que le disque mobile est rapproché du disque-écrou sans venir en contact avec lui du fait que les noyaux plongeurs sont maintenus dans une position intermédiaire, le moyeu étant libre sauf par sa liaison avec la butée à billes et par filetage avec le support mobile.

L'outil de serrage comprend avantageusement un support fixe qui porte le moteur et le deuxième organe, dit "organe fixe".

Selon une autre caractéristique de l'invention, l'outil de serrage comprend une colonne fixée au support fixe et s'étendant dans une direction parallèle à l'axe de rotation de la vis pour assurer un guidage en translation du support mobile qui porte le premier organe, dit "organe mobile".

Selon encore une autre caractéristique de l'invention, l'outil de serrage comprend un support cylindrique creux qui présente une paroi cylindrique centrée sur l'axe de rotation de la vis, et dans laquelle sont taillées deux glissières opposées définissant chacune les premiers et les deuxièmes moyens de guidage, et dans lesquels se déplacent respectivement deux éléments suiveurs portés par l'écrou.

Dans une forme de réalisation préférée de l'invention, l'outil de serrage est réalisé sous la forme d'une pince à souder dans laquelle le premier organe et le deuxième organe constituent respectivement une électrode et une contre-électrode.

Cependant, l'outil de serrage de l'invention trouve des applications dans d'autres domaines, par exemple pour commander les étriers d'un frein à disque de véhicule automobile.

Dans la description qui suit, faite seulement à titre d'exemple, on se réfère aux dessins annexés; sur lesquels :
- la figure 1 est une vue en élévation, avec arrachement partiel, d'un outil de serrage conforme à l'art antérieur ;
- la figure 2 représente une partie du dispositif de la figure 1 modifié pour incorporer un système de compensation selon l'invention ;
- la figure 3 représente un outil de serrage muni d'un système de compensation selon l'invention, dont les moyens de positionnement sont représentés dans une position normale (position A) ; et
- les figures 4 et 5 sont des vues partielles de la figure 3, à échelle agrandie, montrant les moyens de positionnement respectivement dans une position de réinitialisation (position B) et dans une position intermédiaire (position C).

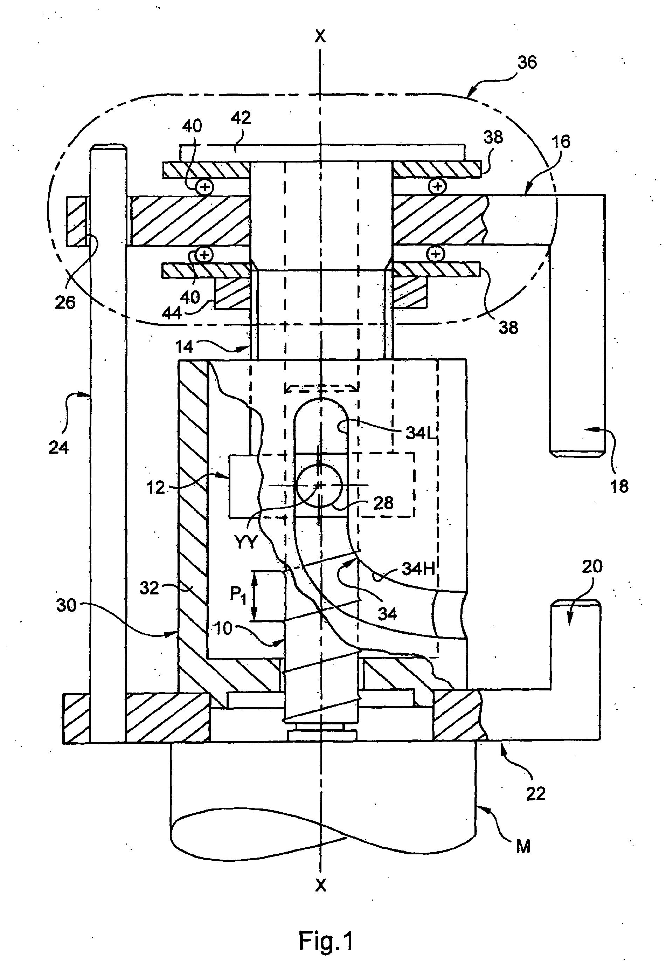

L'outil de serrage représenté à la figure 1 est du type décrit dans la publication internationale WO 02/076665 précitée, à laquelle on pourra se référer pour plus d'informations.

En bref, l'outil de serrage est muni d'un dispositif de serrage comportant une vis 10 propre à être entraînée en rotation autour d'un axe XX par l'intermédiaire d'un moteur électrique M qui peut être couplé à une commande numérique.

Cette vis possède un grand pas P1 et elle peut être entraînée en rotation dans un sens ou dans l'autre par le moteur M. La vis 10 coopère avec un écrou 12 susceptible d'être entraîné en translation dans la direction de l'axe XX de la vis. Cet écrou est solidaire d'un support 14, appelé aussi "support mobile", réalisé ici sous la forme d'un élément tubulaire qui entoure au moins en partie la vis 10. Le support 14 est relié à une platine 16 qui porte un premier organe 18 (appelé aussi "organe mobile") susceptible d'être déplacé en translation, dans une direction parallèle à l'axe XX, pour se rapprocher ou s'éloigner d'un deuxième organe 20 (appelé aussi "organe fixe") porté par un support fixe 22 qui porte également le moteur M. Une colonne 24 est fixée au support fixe 22 et s'étend dans une direction parallèle à l'axe XX pour assurer un guidage en translation du support mobile 14 portant l'organe mobile 18. La platine 16 est munie à cet effet d'un alésage axial 26 traversé par la colonne 24.

Dans l'exemple particulier où l'outil de serrage est une pince à souder, l'organe mobile 18 et l'organe fixe 20 constituent respectivement une électrode et une contre-électrode.

Dans l'exemple de réalisation, le pas P1 de la vis 10 est un pas à droite dont la valeur est avantageusement de l'ordre de grandeur de son propre diamètre. L'écrou 12 est équipé d'une paire de galets 28 qui forment des éléments suiveurs et qui sont montés en rotation autour d'un axe YY qui est perpendiculaire à l'axe XX de la vis. Seul l'un des deux galets 28 est visible sur la figure 1.

Le support fixe 22 porte un support cylindrique creux 30, encore appelé "douille creuse", qui présente une paroi cylindrique 32 dans laquelle sont taillées deux glissières opposées 34 (seule l'une des deux glissières est visible sur la figure 1). Les galets 28 précités sont agencés pour rouler respectivement dans les deux glissières 34 qui forment des moyens de guidage. Chacune des glissières 34 comprend une partie linéaire 34L qui s'étend parallèlement à l'axe de la vis pour procurer un guidage linéaire à l'écrou 12, ainsi qu'une partie hélicoïdale 34H qui se raccorde à la partie linéaire 34L pour procurer un guidage hélicoïdal. Cette partie hélicoïdale s'étend suivant l'axe XX de la vis et possède un pas P2 qui est inversé par rapport au pas P1 de la vis, et qui est donc un pas à gauche dans l'exemple. Tant que les galets 28 sont en contact avec les parties 34L des glissières, ces dernières empêchent l'écrou de tourner, et celui-ci peut se déplacer en translation avec une vitesse linéaire imposée par la vitesse angulaire du moteur et le pas P1 de la vis. Ceci constitue une première phase de déplacement D1, encore appelée course, que l'on peut qualifier de phase inertielle.

A l'approche du point de serrage, c'est-à-dire lorsque les galets 28 se rapprochent respectivement des parties hélicoïdales 34H, ces dernières entraînent l'écrou en rotation dans le même sens que la rotation de la vis. Il en résulte que la vitesse linéaire de l'écrou diminue jusqu'à éventuellement devenir nulle. En effet, ceci provient d'une variation apparente du pas (en fait, la vitesse linéaire de l'écrou est synchronisée sur le pas P2). Il est à noter que ce pas P2 peut être constant ou variable.

Si l'on suppose, par conséquent, que la vis 10 est entraînée en rotation autour de son axe avec une vitesse angulaire établie constante, l'écrou se déplace d'abord (dans le sens du serrage) avec une vitesse constante pour la phase D1 (phase inertielle) et ensuite avec une vitesse plus lente dans une deuxième phase D2.

Dans ce dispositif de serrage selon l'art antérieur, le support 14 est relié à la platine 16 de l'organe mobile 18 par une butée à billes désignée dans son ensemble par la référence 36, par laquelle le support mobile 14 reste en permanence solidaire en translation de l'organe mobile 18. Cette butée à billes 36 comprend deux contre-brides 38 disposées respectivement de part et d'autre de la platine 16 et prenant appui sur celle-ci par l'intermédiaire de billes 40. Les deux contre-brides 38 sont maintenues axialement entre une collerette 42 prévue à une extrémité du support mobile 14 et un écrou 44 vissé autour d'une autre extrémité du support mobile 14.

Le dispositif selon l'art antérieur présente l'inconvénient mentionné en introduction, à savoir qu'il ne peut compenser un décalage intervenu entre les organes 18 et 20, spécialement lorsque ces organes sont des électrodes qui s'usent progressivement.

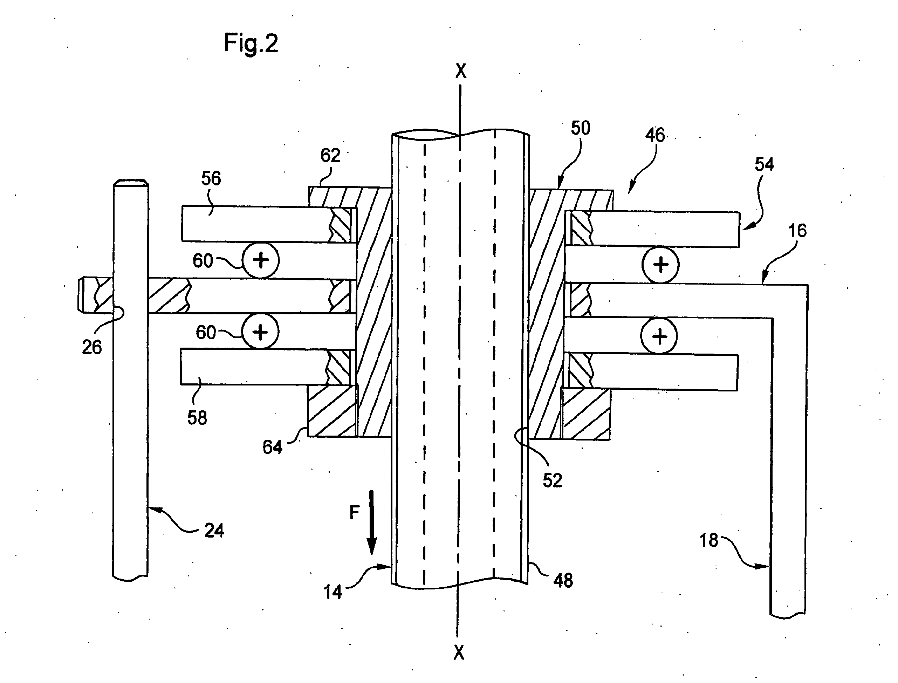

L'invention permet de remédier à cet inconvénient en remplaçant la butée à billes 36 de la figure 1 par un mécanisme de compensation qui va être décrit maintenant en référence à la figure 2.

Le système de compensation 46 représenté à la figure 2 est interposé entre le premier organe 18 et le support mobile 14 (qui est solidaire de l'écrou 12) pour réinitialiser la position du premier organe 18 par rapport au deuxième organe 20, de sorte que les première et deuxième phases de déplacement D1 et D2 engendrées par les premier et deuxième moyens de guidage 34L et 34H restent synchrones avec les phases nécessaires à une optimisation du déplacement du premier organe 18.

Dans l'exemple, le système de compensation 46 comprend le support mobile 14, lequel est réalisé sous la forme d'un élément tubulaire solidaire de l'écrou 12 et muni d'un filetage extérieur 48. Le système de compensation comprend en outre un moyeu 50 muni d'un taraudage intérieur 52 pour coopérer avec le filetage extérieur 48 du support mobile 14. Ce moyeu 50 supporte le premier organe 18 par l'intermédiaire d'une butée à billes 54, qui est réalisée sous la forme d'une butée à double effet comprenant la platine 16 et deux contre-brides 56 et 58 prenant appui sur la platine par l'intermédiaire de billes 60. Ces deux contre-brides sont maintenues axialement entre une collerette 62 formée à une extrémité du moyeu 50 et un écrou 64 vissé autour d'une autre extrémité du moyeu.

Le système de compensation 46 permet, à des fréquences définies selon le service de l'outil de serrage, une possibilité de réinitialisation de la position de l'organe mobile 18 par rapport à l'organe fixe 20, de sorte que les différentes phases de mouvement générées par les moyens de guidage du support cylindrique 30 (douille creuse) restent synchrones avec les phases de mouvement nécessaires à l'optimisation du mouvement de l'organe mobile 18.

Ce système de compensation permet un déplacement longitudinal relatif de l'organe 18 par rapport à l'organe 20 afin de compenser les variations de leur écartement. Ceci présente un intérêt tout particulier dans le cas où l'organe mobile 18 et l'organe fixe 20 constituent respectivement une électrode et une contre-électrode, pour compenser la somme de leurs usures respectives.

Des moyens de positionnement, dont un exemple de réalisation sera décrit plus loin, permettent de placer sélectivement le moyeu 50 dans l'une des trois positions suivantes :
- position normale ("position A") en laquelle le moyeu 50 est solidaire en translation et en rotation du support mobile 14 ;
- position de réinitialisation (position "B") en laquelle le moyeu 50 est solidaire en translation et en rotation du premier organe 18 ; et
- position intermédiaire (position "C") en laquelle le moyeu 50 est libre sauf par sa liaison avec la butée à billes 54 et par filetage avec le support mobile14.

Dans la position normale A, le système de compensation 46 de la figure 2 a un fonctionnement identique à celui du sous-ensemble constitué par la butée à billes 36 de la figure 1. On a donc un fonctionnement de l'outil en production normale.

Dans la position de réinitialisation B, le fonctionnement est le suivant. Pendant la phase de déplacement D1, dans laquelle les galets 28 se déplacent dans les parties linéaires 34L des glissières, rien ne se passe dans le système de compensation, du fait que le support mobile 14 ne tourne pas et que la platine 16 est animée du même mouvement de translation que dans la position normale A.

Lorsque chacun des galets 28 entre dans la partie hélicoïdale 34H de la glissière correspondante, le support mobile 14 se met à tourner, tandis que le moyeu 50, qui est bloqué en rotation par la platine 16, va avancer sur le support mobile 14 dans le sens de la flèche F. Cette avance, qui se superpose à celle engendrée par les parties hélicoïdales 34H des glissières, va donc compenser l'augmentation de l'écartement des organes mobiles 18 et 20, cette augmentation étant due à l'usure lorsque les organes 18 et 20 constituent respectivement une électrode et une contre-électrode. L'arrêt du mouvement se fait par la mise en contact des organes 18 et 20 sur une cale étalon (non représentée), voire directement entre elles.

Ce système de compensation, dont l'avancée réelle dépend de la valeur relative du pas du filetage 48 entre le support mobile 14 et le moyeu 50 et du pas des parties hélicoïdales 34 H des glissières 34, amène à prévoir pour chaque cas d'utilisation une épaisseur de cale étalon à définir et une périodicité de réinitialisation. L'idéal est que cette opération se fasse en une seule fermeture de l'outil de serrage et en un temps masqué pour l'utilisation de celle-ci. I1 est à noter que la mise en rotation du support mobile 14, seulement à la fin de la phase D1, évite tout risque de voir se produire, après réinitialisation, un serrage dans cette phase.

Bien entendu, si la réinitialisation ne pouvait se faire en une seule manoeuvre (par exemple si les galets 28 arrivent en fond des glissières, avant que les organes 18 et 20 ne se touchent ou ne touchent la cale étalon, il est possible de refaire une seconde manoeuvre.

I1 convient cependant de noter les points suivants.

Les galets 28 et les parties hélicoïdales 34H des glissières vont générer une rotation du support mobile 14, dans un sens à la fermeture, et dans l'autre sens à l'ouverture, si bien que dans la position B, le moyeu 50 se déplacera dans le sens de la flèche F à là fermeture, et en sens inverse à l'ouverture.

Ceci implique que toute ouverture de l'outil de serrage, qui suit une réinitialisation que ce soit en manoeuvre unique ou en manoeuvre multiple, doit se faire dans la position A, ceci afin que le moyeu 50 ne fasse pas, à la fermeture et à la réouverture, de cycles qui s'annuleraient.

Il est à noter que le système de compensation permet aussi d'effectuer des réétalonnages, par exemple après changement d'électrodes, ou des réglages d'essais, notamment pour réaliser des tests avec des jauges de contrainte. Ces opérations se feront avantageusement en déplaçant manuellement le moyeu 50 dans la position C avant retour en position A pour les essais.

Dans le cas particulier où les organes sont des électrodes, l'éventualité d'un changement automatique d'électrodes entraînerait de fait un écartement de leurs supports pour compenser le fait que les électrodes neuves sont plus longues. Cet écartement peut s'obtenir par l'utilisation de la position B dans une phase d'ouverture de l'outil de serrage. La réinitialisation se fait ensuite par le cycle précédemment défini. Ce processus peut bien évidemment s'appliquer pour tout changement d'électrode, de manière manuelle, ou pour toute autre opération.

Enfin, dans le cas de pas de vis petits entre le support mobile 14 et le moyeu 50, on pourra éventuellement admettre que l'irréversibilité du système vis-écrou est suffisante pour solidariser les deux pièces en position A.

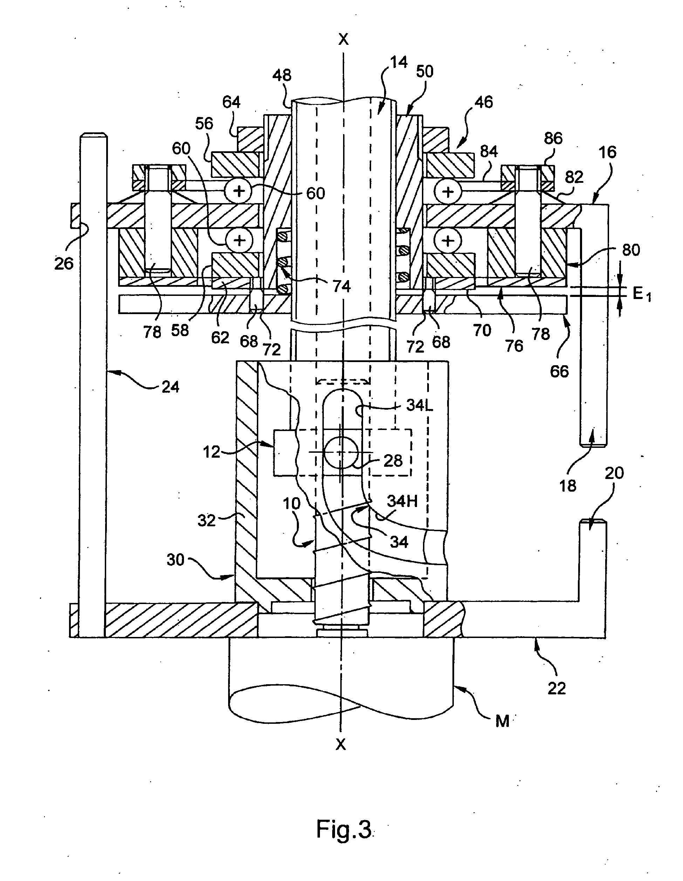

On se réfère maintenant à la figure 3, dans laquelle le système de compensation 46 est représenté avec des moyens de positionnement qui comprennent un disque-écrou 66 solidaire en rotation du moyeu 50 grâce à des broches axiales 68 issues d'une extrémité 70 du moyeu et s'engageant dans des trous respectifs 72 du disque-écrou. Ce disque-écrou est donc déplaçable librement en translation axiale par rapport au moyeu, dans les limites des jeux des différents filets des pièces concernées. Il est taraudé intérieurement pour coopérer avec le filetage extérieur 48 du support mobile 14. Un ressort 74, dans l'exemple hélicoïdal, est engagé dans une cavité du moyeu 50 et est agencé pour écarter le disque-écrou 66 de l'extrémité 70 du moyeu. Ici, et contrairement à la forme de réalisation de la figure 2, les positions respectives de la collerette 62 et de l'écrou 64 sont inversées. Autrement dit, la collerette 62 est à l'extrémité inférieure du moyeu 50 et l'écrou 64 à l'extrémité supérieure du moyeu 50 (sur le dessin). C'est donc la collerette 62 qui constitue l'extrémité 70 du moyeu.

L'ensemble formé par le disque-écrou 66 et le moyeu 50 fonctionne comme un système d'écrou et de contre-écrou inversé, à savoir que, lorsque le disque-écrou 66 est plaqué sur le moyeu 50, l'ensemble se comporte comme un seul écrou tournant sans contrainte sur le filetage 48 du support mobile 14. lorsque le disque-écrou 66 s'écarte du moyeu 50 sous l'effet du ressort 74, le disque-écrou 66 et le moyeu 50 créent une contrainte sur les filets qui les solidarise du support mobile 14. Pour le bon fonctionnement du système, le taraudage du disque-écrou 66 est réalisé avec un jeu important.

Les moyens de positionnement comprennent en outre des noyaux plongeurs 78 solidaires d'un disque mobile 76 et traversant la platine 16 faisant partie de l'organe mobile. Cette platine porte un bobinage 80 (composé de plusieurs bobines) agencé, lorsqu'il est alimenté électriquement, pour déplacer le disque-écrou 66 vers l'extrémité 70 du moyeu 50 (donc vers la collerette 62) et le disque mobile 76 solidaire des noyaux plongeurs 78 vers le disque-écrou 66, et ceci à l'encontre d'un organe de rappel 82 agissant sur les noyaux plongeurs. Dans l'exemple, cet organe de rappel est constitué par des rondelles Belleville. Une couronne 84 percée d'ouvertures appropriées est traversé par les noyaux plongeurs 78 et est maintenue entre l'organe de rappel 82 et des écrous 86 vissés respectivement sur les noyaux plongeurs 78.

Dans la position normale A, le bobinage 80 n'est pas alimenté électriquement, si bien que le disque-écrou 66 est écarté de l'extrémité 70 du moyeu assurant ainsi un blocage du moyeu sur le support tubulaire 14. I1 existe alors un intervalle ou entrefer E₁ entre le disque-écrou 66 et le disque mobile 76 (figure 3).

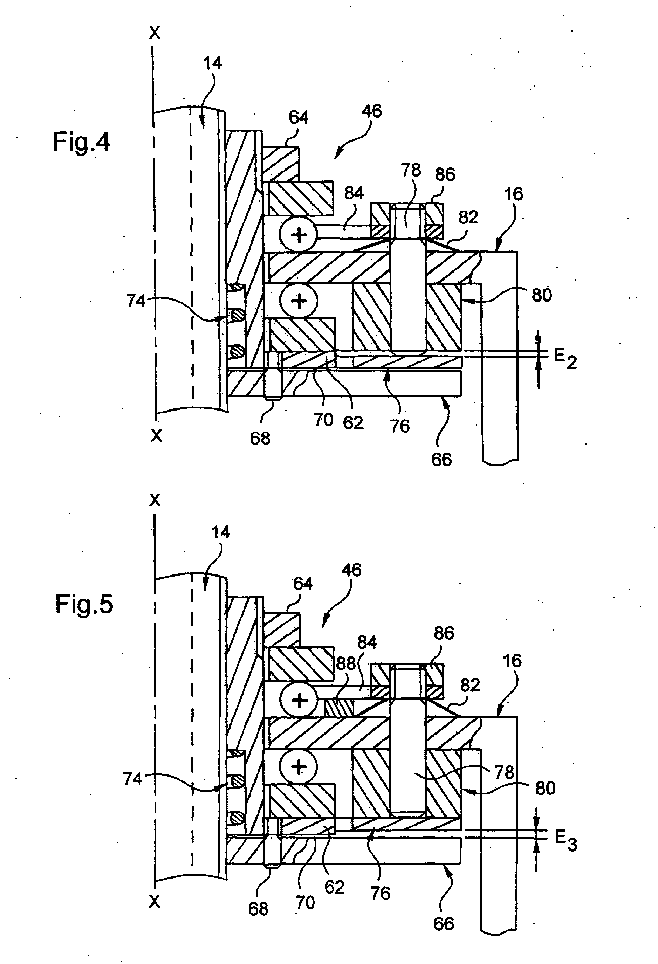

Dans la position de réinitialisation B (figure 4), le bobinage 80 est alimenté électriquement, si bien que le disque-écrou 66 se rapproche au contact de l'extrémité 70 du moyeu 50 et que le disque mobile 76 se rapproche au contact du disque-écrou 66 assurant ainsi un blocage du moyeu 50 sur la platine 16 et, par conséquent, sur le premier organe 18. L'organe de rappel 82 est alors comprimé sous l'effet de l'effort de traction réalisé par les noyaux plongeurs 78. Il existe alors un intervalle ou entrefer E₂ entre le disque mobile 76 et le bobinage 80 (figure 4).

Dans la position intermédiaire C (figure 5), le bobinage 80 est alimenté électriquement, si bien que le disque-écrou 66 est rapproché au contact de l'extrémité 70 du moyeu 50, tandis que le disque mobile 76 est rapproché du disque-écrou 66, sans venir en contact avec lui du fait que les noyaux plongeurs 78 sont maintenus dans une position intermédiaire, le moyeu étant libre sauf par sa liaison avec la butée à billes et par filetage avec le support mobile 14.Ce maintien en position intermédiaire peut être obtenu en interposant une cale appropriée 88 entre la platine 16 et la couronne 84. La cale 88 détermine cette position intermédiaire et empêche la mise en contact du disque mobile 76 et du disque-écrou 66 et par conséquent leur solidarisation. Il existe alors un intervalle ou entrefer E₃ entre le disque-écrou 66 et le disque mobile 76 (figure 5), lequel est plus petit que l'intervalle ou entrefer E₁ (figure 3).

L'invention s'applique de manière générale aux outils de serrage, en particulier pinces à souder, mais aussi à d'autres types d'outils, comme par exemple des systèmes de freinage à disques ou encore des fermetures de presses à injecter.

Plus généralement, elle trouve une application chaque fois que des déplacements sur un axe nécessitent des changements importants de caractéristiques mécaniques (efforts et vitesses), ceci avec ou sans usure spécifique des pièces en contact.

La réalisation du système de compensation d'usure et de ses trois positions A, B et C peut aussi s'effectuer avec une motorisation auxiliaire ou tout autre système automatique ou manuel.

L'état d'usure des organes 18 et 20 peut être mesuré en permanence par un contrôle de l'angle de rotation du support mobile 14. Cette mesure, effectuée en temps réel, peut dans la plupart des cas entraîner une correction en temps masqué.

## Revendications

1. Outil de serrage comportant un premier organe (18) et un deuxième organe (20) capables d'un déplacement relatif sous l'action d'un dispositif d'entraînement, ce dispositif comprenant une vis (10) d'un pas donné (P1) propre à être entraînée en rotation autour d'un axe (XX), dans un sens ou dans un sens opposé, sous l'action d'un moteur M ; un écrou (12) coopérant avec la vis (10) et propre à être entraîné en translation dans la direction de l'axe (XX) de la vis, ledit écrou étant solidaire en translation du premier organe (18) ; des premiers moyens de guidage (34L) définissant un guidage linéaire parallèle à l'axe (XX) de la vis pour bloquer la rotation de l'écrou (12) dans une première phase de déplacement (D1) de l'écrou ; et des deuxièmes moyens de guidage (34H) définissant un guidage hélicoïdal qui s'étend suivant l'axe (XX) de la vis (12) et qui a un pas (P2) inversé par rapport au pas (P1) de la vis pour permettre la rotation de l'écrou (12) dans le même sens de rotation que la vis (10) dans une deuxième phase de déplacement (D2) de l'écrou,
**caractérisé en ce qu'**il comprend un système de compensation (46) interposé entre le premier organe (18) et un support mobile (14) solidaire de l'écrou (12) pour réinitialiser la position de ce premier organe (18) par rapport au deuxième organe (20), de sorte que les première et deuxième phases de déplacement engendrées par les premier et deuxième moyens de guidage (34L, 34H) restent synchrones avec les phases nécessaires à une optimisation du déplacement du premier organe.

2. Outil de serrage selon la revendication 1, **caractérisé en ce que** le système de compensation (46) comprend le support mobile (14) réalisé sous la forme d'un élément tubulaire solidaire de l'écrou (12) et muni d'un filetage extérieur (48), ainsi qu'un moyeu (50) taraudé intérieurement et coopérant avec le filetage extérieur du support mobile (14), ce moyeu (50) supportant le premier organe (18) par l'intermédiaire d'une butée à billes (54).

3. Outil de serrage selon la revendication 2, **caractérisé en ce qu'**il comprend des moyens de positionnement (66 ; 76 ; 80) pour placer sélectivement le moyeu (50) dans l'une des trois positions suivantes :
- position normale ("position A") en laquelle le moyeu (50) est solidaire en translation et en rotation du support mobile (14) ;
- position de réinitialisation ("position B") en laquelle le moyeu (50) est solidaire en translation et en rotation du premier organe (18) ; et
- position intermédiaire ("position C") en laquelle le moyeu (50) est libre sauf par sa liaison avec la butée à billes (54) et par filetage avec le support mobile (14).

4. Outil de serrage selon la revendication 3, **caractérisé en ce que** les moyens de positionnement comprennent un disque-écrou (66) solidaire en rotation du moyeu (50), déplaçable librement en translation axiale par rapport au moyeu (50) et taraudé intérieurement pour coopérer avec le filetage extérieur (48) du support mobile (14) ; un ressort (74) agencé pour écarter le disque-écrou d'une extrémité (70) du moyeu ; des noyaux plongeurs (78) solidaires d'un disque mobile (76) et traversant une platine (16) faisant partie du premier organe (18) ; et un bobinage (80) porté par la platine et agencé, lorsqu'il est alimenté électriquement, pour déplacer le disque-écrou (66) vers l'extrémité (70) du moyeu (50) et le disque mobile (76) solidaire des noyaux plongeurs (78) vers le disque-écrou (66), à l'encontre d'un organe de rappel (82) agissant sur les noyaux plongeurs (78).

5. Outil de serrage selon les revendications 3 et 4, prises en combinaison, **caractérisé en ce que** :
- dans la position normale ("position A"), le bobinage (80) n'est pas alimenté électriquement, si bien que le disque-écrou (66) est écarté de l'extrémité (70) du moyeu (50), assurant ainsi un blocage du moyeu sur le support mobile (14) ;
- dans la position de réinitialisation ("position B"), le bobinage (80) est alimenté électriquement, si bien que le disque-écrou (66) se rapproche au contact de l'extrémité (70) du moyeu (50) et que le disque mobile (76) se rapproche au contact du disque-écrou (66) assurant ainsi un blocage du moyeu (50) sur la platine (16) et, par conséquent, sur le premier organe (18) ; et
- dans la position intermédiaire ("position C"), le bobinage (80) est alimenté électriquement, si bien que le disque-écrou (66) est rapproché au contact de l'extrémité (70) du moyeu (50), tandis que le disque mobile (76) est rapproché du disque-écrou (66) sans venir en contact avec lui du fait que les noyaux plongeurs (78) sont maintenus dans une position intermédiaire, le moyeu (50) étant libre sauf par sa liaison avec la butée à billes et par filetage avec le support mobile (14).

6. Outil de serrage selon l'une des revendications 1 à 5, **caractérisé en ce qu'**il comprend un support fixe (22) qui porte le moteur (M) et le deuxième organe (20), dit "organe fixe".

7. Outil de serrage selon la revendication 6, **caractérisé en ce qu'**il comprend une colonne (24) fixée au support fixe (22) et s'étendant dans une direction parallèle à l'axe de rotation (XX) de la vis pour assurer un guidage en translation du support mobile (14) qui porte le premier organe (18), dit "organe mobile".

8. Outil de serrage selon l'une des revendications 1 à 7, **caractérisé en ce qu'**il comprend un support cylindrique creux (30) qui présente une paroi cylindrique (32) centrée sur l'axe de rotation (XX) de la vis (10), et dans laquelle sont taillées deux glissières opposées (34) définissant chacune les premiers et les deuxièmes moyens de guidage, et dans lesquels se déplacent respectivement deux éléments suiveurs (28) portés par l'écrou (12).

9. Outil de serrage selon l'une des revendications 1 à 8, **caractérisé en ce qu'**il est réalisé sous la forme d'un pince à souder, le premier organe (18) et le deuxième organe (20) constituant respectivement une électrode et une contre-électrode.

## Claims

1. Clamping tool comprising a first element (18) and a second element (20) capable of relative displacement under the action of a drive device, this device comprising a screw (10) with a given pitch (P1) capable of being driven in rotation about an axis (XX) in one direction or in the opposite direction under the action of a motor M; a nut (12) cooperating with the screw (10) and capable of being driven in translation in the direction of the axis (XX) of the screw, the nut being rigid in translation with the first element (18); first guide means (34L) defining a linear guide parallel to the axis (XX) of the screw in order to lock the nut (12) in rotation in a first phase of displacement (D1) of the nut; and second guide means (34H) defining a helicoidal guide which extends along the axis (XX) of the screw (12) and which has an inverted pitch (P2) relative to the pitch (P1) of the screw in order to allow rotation of the nut (12) in the same direction of rotation as the screw (10) in a second phase of displacement (D2) of the nut,
**characterised in that** it comprises a compensation system (46) interposed between the first element (18) and a mobile support (14) rigid with the nut (12) in order to reinitialise the position of this first element (18) relative to the second element (20), so that the first and second displacement phases generated by the first and second guide means (34L, 34H) remain synchronous with the phases necessary to optimisation of the displacement of the first element.

2. Clamping tool according to claim 1, **characterised in that** the compensation system (46) comprises the mobile support (14) in the form of a tubular element rigid with the nut (12) and equipped with a male thread (48), as well as a hub (50) with a female thread and cooperating with the male thread of the mobile support (14), this hub (50) supporting the first element (18) via a thrust ball bearing (54).

3. Clamping tool according to claim 2, **characterised in that** it comprises positioning means (66; 76; 80) for selectively placing the hub (50) in one of the three following positions:
- normal position ("position A") in which the hub (50) is rigid in translation and in rotation with the mobile support (14);
- reinitialising position ("position B") in which the hub (50) is rigid in translation and rotation with the first element (18); and
- intermediate position ("position C") in which the hub (50) is free except for its connection to the thrust ball bearing (54) and its threaded connection to the mobile support (14).

4. Clamping tool according to claim 3, **characterised in that** the positioning means comprise a nut plate (66) rigid in rotation with the hub (50), freely displaceable in axial translation relative to the hub (50) and with a female thread to cooperate with the male thread (48) of the mobile support (14); a spring (74) contrived to move the nut plate away from one end (70) of the hub; solenoid plungers (78) rigid with a mobile disc (76) and traversing a plate (16) forming part of the first element (18); and a winding (80) carried by the plate and contrived, when supplied with electricity, to displace the nut plate (66) towards the end (70) of the hub (50) and the mobile disc (76) rigid with the solenoid plungers (78) towards the nut plate (66), counter to a spring-back element (82) acting on the solenoid plungers (78).

5. Clamping tool according to claims 3 and 4, taken in combination, **characterised in that**:
- in the normal position ("position A"), the winding (80) is not supplied with electricity, so that the nut plate (66) is apart from the end (70) of the hub (50), thus effecting locking of the hub on the mobile support (14);
- in the reinitialising position ("position B"), the winding (80) is supplied with electricity, so that the nut plate (66) comes closer into contact with the end (70) of the hub (50) and the mobile disc (76) comes closer into contact with the nut plate (66), thus effecting locking of the hub (50) on the plate (16) and, consequently, on the first element (18); and
- in the intermediate position ("position C), the winding (80) is supplied with electricity, so that the nut plate (66) is brought closer into contact with the end (70) of the hub (50), whereas the mobile disc (76) is brought closer to the nut plate (66) without coming into contact therewith due to the fact that the solenoid plungers (78) are held in an intermediate position, the hub (50) being free except for its connection to the thrust ball bearing and its threaded connection to the mobile support (14).

6. Clamping tool according to one of claims 1 to 5, **characterised in that** it comprises a fixed support (22) which carries the motor (M) and the second element (20), known as the "fixed element".

7. Clamping tool according to claim 6, **characterised in that** it comprises a column (24) fixed to the fixed support (22) and extending in a direction parallel to the axis of rotation (XX) of the screw in order to effect guiding in translation of the mobile support (14) which carries the first element (18), known as the "mobile element".

8. Clamping tool according to one of claims 1 to 7, **characterised in that** it comprises a hollow cylindrical support (30) which has a cylindrical wall (32) centred on the axis of rotation (XX) of the screw (10), and in which are cut two opposite slides (34) each defining the first and second guide means, and in which respectively two tracking elements (28) are displaced carried by the nut (12).

9. Clamping tool according to one of claims 1 to 8, **characterised in that** it takes the form of soldering pliers, the first element (18) and the second element (20) forming an electrode and a counter-electrode, respectively.

## Patentansprüche

1. Klemmwerkzeug mit einem ersten Organ (18) und einem zweiten Organ (20), die relativverschiebbar sind unter der Wirkung einer Antriebsvorrichtung, wobei diese Vorrichtung umfasst: eine Schraube (10) mit einer Ganghöhe bzw. einem Gang (P1), drehbar um eine Achse (XX) in einer Richtung oder in einer entgegengesetzten Richtung unter der Einwirkung eines Motors M; eine mit der Schraube (10) kooperierende Mutter (12), fähig eine Translation in der Richtung (XX) der Schraube auszuführen, wobei die genannte Mutter translationsfest mit dem ersten Organ (18) verbunden ist; erste Führungseinrichtungen (34L), die eine Linearführung parallel zu der Achse (XX) der Schraube definieren, um in einer ersten Verschiebungsphase (D1) der Mutter (12) die Rotation der Mutter zu blockieren; und zweite Führungseinrichtungen (34H), die eine spiralförmige Führung definieren, die sich gemäß der Achse (XX) der Schraube (12) erstreckt und einen in Bezug auf den Gang (P1) der Schraube umgekehrten Gang (P2) aufweist, um in einer zweiten Verschiebungsphase (D2) der Schraube die Rotation der Mutter (12) in derselben Rotationsrichtung wie die Schraube (10) zu ermöglichen,
**dadurch gekennzeichnet, dass** es ein Ausgleichssystem (46) umfasst, eingefügt zwischen dem ersten Organ (18) und einem mit der Mutter (12) fest verbundenen beweglichen Träger (14), um die Position dieses ersten Organs (18) in Bezug auf das zweite Organ (20) zu reinitialisieren, so dass die erste und die zweite Verschiebungsphase, verursacht durch die ersten und zweiten Führungseinrichtungen (34L, 34H), synchron zu den für eine Optimierung der Verschiebung des ersten Organs notwendigen Phasen bleiben.

2. Klemmwerkzeug nach Anspruch 1 , **dadurch gekennzeichnet, dass** das Ausgleichssystem (46) den beweglichen Träger (14), realisiert in Form eines rohrförmigen Elements, fest mit der Mutter (12) verbunden und mit einem Außengewinde (48) versehen, sowie eine Nabe (50) mit einem Innengewinde umfasst, das mit dem Außengewinde des beweglichen Trägers (14) kooperiert, wobei diese Nabe (50) das erste Organ (18) mit Hilfe eines Kugellagers bzw. einer Kugellagerscheibe (54) trägt.

3. Klemmwerkzeug nach Anspruch 2, **dadurch gekennzeichnet, dass** es Positionierungseinrichtungen (66 ; 76 ; 80) umfasst, um die Nabe (50) in einer der drei folgenden Positionen zu platzieren:
- Normalposition ("Position A"), in der die Nabe (50) translations- und rotationsfest mit dem beweglichen Träger (14) verbunden ist;
- Reinitialisierungsposition ("Position B"), in der die Nabe (50) translations- und rotationsfest mit dem ersten Organ (18) verbunden ist; und
- Zwischenposition ("Position C"), in der die Nabe (50) frei ist, abgesehen von ihrer Verbindung mit dem Kugellager bzw. der Kugellagerscheibe (54) und ihrer Verschraubung mit dem beweglichen Träger (14).

4. Klemmwerkzeug nach Anspruch 3, **dadurch gekennzeichnet, dass** die Positionierungseinrichtungen umfassen: eine rotationsfest mit der Nabe (50) verbundene Scheibenmutter (66), axial frei verschiebbar in Bezug auf die Nabe (50) und mit einem Innengewinde versehen, das mit dem Außengewinde (48) des beweglichen Trägers (14) kooperiert; eine Feder (74), eingerichtet um die Scheibenmutter von einem Ende (70) der Nabe zu beabstanden; Tauchkerne bzw. Anker (78), die fest mit einer beweglichen Scheibe (76) verbunden sind und eine Platte (16) durchqueren, die Teil des ersten Organs (18) ist; und eine Wicklung (80), getragen durch die Platte und so eingerichtet, dass sie, wenn sie elektrisch gespeist wird, die Scheibenmutter (66) in Richtung Ende (70) der Nabe (50) und die fest mit den Tauchkernen (78) verbundene bewegliche Scheibe (76) in Richtung Scheibenmutter (66) verschiebt, gegen ein auf die Tauchkerne (78) einwirkendes Rückstellorgan (82).

5. Klemmorgan nach den kombinierten Ansprüche 3 und 4, **dadurch gekennzeichnet:**
- **dass** in der Normalposition ("Position A") die Wicklung (80) nicht elektrisch gespeist wird, so dass die Scheibenmutter (66) zu dem Ende (70) der Nabe (50) beabstandet ist, was also eine Blockierung der Nabe auf dem beweglichen Träger (14) gewährleistet;
- **dass** in der Reinitialisierungsposition ("Position B") die Wicklung (80) elektrisch gespeist wird, so dass die Scheibenmutter (66) sich dem Kontakt mit dem Ende (70) der Nabe (50) nähert und die bewegliche Scheibe (76) sich dem Kontakt mit der Scheibenmutter (66) nähert, was also eine Blockierung der Nabe (50) auf der Platte (16) und folglich auf dem ersten Organ (18) gewährleistet; und
- **dass** in der Zwischenposition ("Position C") die Wicklung (80) elektrisch gespeist wird, so dass die Scheibenmutter (66) sich dem Kontakt mit dem Ende (70) der Nabe (50) nähert, während die bewegliche Scheibe (76) sich der Scheibenmutter (66) nähert, ohne mit ihr in Kontakt zu kommen, da die Tauchkerne (78) in einer Zwischenposition gehalten werden, wobei die Nabe (50) frei ist, abgesehen von ihrer Verbindung mit dem Kugellager bzw. der Kugellagerscheibe und ihrer Verschraubung mit dem beweglichen Träger (14).

6. Klemmwerkzeug nach einem der Ansprüche 1 bis 5, **dadurch gekennzeichnet, dass** es einen feststehenden Träger (22) umfasst, der den Motor (M) und das zweite Organ (20), "feststehendes Organ" genannt, trägt.

7. Klemmwerkzeug nach Anspruch 6, **dadurch gekennzeichnet, dass** es eine am feststehenden Träger (22) befestigte Säule (24) umfasst, die sich in einer zu der Rotationsachse (XX) der Schraube parallelen Richtung erstreckt, um eine translatorische Führung des beweglichen Trägers (14) zu gewährleisten, der das erste Organ (18), "bewegliches Organ" genannt, trägt.

8. Klemmwerkzeug nach einem der Ansprüche 1 bis 7, **dadurch gekennzeichnet, dass** es einen hohlen zylindrischen Träger (30) umfasst, der eine zylindrische Wand (32) aufweist, die auf die Rotationsachse (XX) der Schraube (10) zentriert ist und in die zwei entgegengesetzte Gleitführungen (34) eingearbeitet sind, von denen jede die ersten und die zweiten Führungseinrichtungen definieren und in denen sich jeweils zwei durch die Mutter (12) getragenen Nachführelemente (28) verschieben.

9. Klemmwerkzeug nach einem der Ansprüche 1 bis 8, **dadurch gekennzeichnet, dass** es in Form einer Schweißzange realisiert ist, wobei das erste Organ (18) und das zweite Organ (20) jeweils eine Elektrode und eine Gegenelektrode bilden.
